# EUROPÄISCHE PATENTSCHRIFT

(11) **EP 4 008 844 B1**
(45) Veröffentlichungstag und Bekanntmachung des Hinweises auf die Patenterteilung: **21.02.2024**
(21) Anmeldenummer: 21193705.7
(22) Anmeldetag: 30.08.2021
(51) Int. Cl.: E03B 7/07, B01D 29/11, B01D 35/147, F16K 27/00, F16K 31/04, G01F 1/10, G01M 3/28, B01D 29/33, G01F 1/12

(54) **LECKAGESCHUTZ-ANORDNUNG**
LEAKAGE PROTECTION ARRANGEMENT
SYSTÈME DE PROTECTION CONTRE LES FUITES

(30) Priorität: 04.12.2020 DE 202020106989 U
(43) Veröffentlichungstag der Anmeldung: 08.06.2022
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A1- 3 637 216
- DE-U1- 9 200 219
- DE-U1-202014 102 880

## Beschreibung

### Technisches Gebiet

Die Erfindung betrifft eine Leckageschutz-Anordnung zum Einbau in einer Wasserinstallation vor einer oder mehreren Zapfstellen enthaltend
(a) ein Gehäuse;
(b) eine Absperrung zum Unterbrechen der Wasserzufuhr in der Wasserinstallation; und
(c) einen Filter, welcher in einer lösbar an dem Gehäuse befestigbaren Gehäusetasse angeordnet ist.

Leckageschutz-Anordnung dienen dazu untypische und/oder unerwünschte Strömungsverhältnisse in der Wasserinstallation zu ermitteln und geeignete Maßnahmen einzuleiten. Eine dieser Maßnahmen ist das Betätigen der Absperrung.

Eine solche Leckageschutz-Anordnung wird besonders in Hauswasserinstallationen verwendet. Das von einer Versorgungsleitung für ein Gebäude oder eine Gebäudeeinheit zur Verfügung gestellte Trinkwasser wird normalerweise gefiltert und auf einen gleichmäßigen Druck geregelt. Wenn Wasser an einer Zapfstelle entnommen wird, ändert sich der Strömungszustand. Für eine kurze Zeit fließt Wasser durch die Anordnung. Unter untypischen Strömungszuständen werden solche Zustände verstanden, die bei normalem Betrieb nicht auftreten. Ein Beispiel für solche Strömungszustände ist ein kleines Leck. Ein solches kleines Leck tritt beispielsweise durch Lochfraß auf. Bei Auftreten eines Lecks fließt ständig eine geringe Wassermenge. Ein anderes Beispiel für solche untypischen Strömungszustände ist ein Wasserrohrbruch. Dann fließen in sehr kurzer Zeit sehr große Wassermengen. Als Leckageschutz wird das Erfassen solcher untypischen Strömungszustände verstanden und das Ergreifen geeigneter Maßnahmen. Insbesondere wird die Absperrung bei Leckage geschlossen.

Es gibt auch unerwünschte Strömungszustände. Diese liegen insbesondere bei Stagnation vor. Wenn über einen längeren Zeitraum kein Wasser gezapft wird, stagniert das Wasser. Dann können sich Keime bilden. Das ist unerwünscht.

Bei Leckageschutzanordnungen geht es nicht um die Überwachung des Wasserverbrauchs, sondern um das Erfassen der Strömungszustände ohne in nennenswertem Maß in die Hydraulik einzugreifen. Mit anderen Worten: Der Verbraucher oder die Verbraucherin darf so viel Wasser verbrauchen, wie gewünscht. Nur, wenn ein untypischer oder unerwünschter Strömungszustand vorliegt, wird in die Hydraulik eingegriffen und die Absperrung betätigt.

### Stand der Technik

DE 10 2005 000 009 A1 offenbart eine Filteranordnung, welche einen integrierten Leckageschutz aufweist. Die Anordnung verwendet einen Rückspülfilter und eine unmittelbar vor dem Rückspülfilter angeordnete Turbine. Jede Wasserströmung durch den Filter wird mit der Turbine erfasst und ausgewertet. Die hydraulischen Verhältnisse an der Zapfstelle bleiben zu jedem Zeitpunkt unverändert. DE 10 2007 026 162 A1 offenbart einen Druckminderer mit strömungsmessenden Mitteln. Wenn Leckage detektiert wird, wird der Druckminderer geschlossen. DE 20 2008 003 055 U1 offenbart einen Druckminderer-Filter-Modulbausatz, in den strömungsmessende Mittel für Leckageschutz einsetzbar sind.

WO 2014/029699 A1 offenbart eine Leckageschutzanordnung welche Flansche aufweist, an welche Filter, Druckminderer oder Druckminderer-Filterkombinationen anflanschbar sind. Druckminderer-Filterkombinationen werden auch als "Drufi" bezeichnet und sehen eine Druckmindererpatrone im Inneren eines zylindrischen Filters vor.

Die bekannten Leckageschutzanordnungen werden allein oder in Kombination mit Druckminderern und/oder Filtern am Hauswassereingang für die Trinkwasserversorgung installiert. Typischerweise werden Filter eingesetzt, welche sich in einer zylindrischen Gehäusetasse befinden, die mit dem übrigen Gehäuse der Armatur verschraubt ist.

Zum Warten der Filter an bekannten Anordnungen, etwa DE 20 2014 102 880 U1 der Anmelderin wird eine eingangsseitige Absperrung, beispielsweise der Haupthahn im Trinkwasser-Eingangsbereich des Gebäudes von Hand abgesperrt. Außerdem muss ausgangsseitig eine Absperrung vorgesehen sein, welche zum Warten des Filters ebenfalls abgesperrt wird. Der Installateur wird dann einen Behälter unter den Filter stellen und die Gehäusetasse lösen. Wasser, welches sich in der Leitung und der Armatur befindet, fließt dann in den Behälter. Wenn sich die Absperrungen weit entfernt von der Anordnung befinden, fließt viel Wasser ab. Dann ist der Behälter möglicherweise nicht groß genug. Viel Luft gelangt in die Installation. Wenn vergessen wird, die Absperrung zu betätigen, bevor der Filter gelöst wird, fließt sehr viel Wasser nach außen ab.

### Offenbarung der Erfindung

Es ist Aufgabe der Erfindung, die Menge des abfließenden Wassers bei der Filterwartung auf ein Minimum sicher zu begrenzen. Erfindungsgemäß wird die Aufgabe bei einer Leckageanordnung der eingangs genannten Art gelöst durch
(d) eine Arretiervorrichtung zum Arretieren der Gehäusetasse in einer am Gehäuse fixierten Position, wobei
(e) die Arretierung durch Betätigung der Absperrung lösbar ist.

Erfindungsgemäß kann die Gehäusetasse erst dann entfernt werden, wenn die Absperrung geschlossen ist. Anders als bei bekannten Filteranordnungen erfolgt die Absperrung nicht durch den Haupthahn oder eine andere stromaufwärtige Absperrung der Wasserinstallation, sondern unmittelbar vor dem Filter in der gleichen Armatur. Die Erfindung basiert auf der Erkenntnis, dass eine Leckageanordnung ja bereits eine eigene Absperrung aufweist, die auch bei der Filterwartung genutzt werden kann. Ein versehentliches Entfernen der Gehäusetasse bei geöffneter Absperrung ist nicht mehr möglich. Nur wenig Wasser befindet sich im Strömungsweg zwischen Absperrung und Filteranordnung, wodurch die Wartung weiter vereinfacht wird.

Eine Leckageschutz-Anordnung hat vorzugsweise ein Steuergerät mit einer von den Signalen eines Strömungsmessers beaufschlagten Signalverarbeitungseinrichtung zum Ermitteln untypischer und/oder unerwünschter Strömungsverhältnisse in der Wasserinstallation und zum Betätigen der Absperrung. Zum Betätigen der Absperrung kann insbesondere ein Motor vorgesehen sein. Das Steuergerät kann eine Wartungsstellung vorsehen, bei welcher der Motor zum Warten des Filters geschlossen wird. Dabei wird gleichzeitig die Arretierung freigegeben.

Der Strömungsmesser kann außerhalb der Armatur vorgesehen sein. Eine kompakte Stand-Alone-Anordnung wird aber erreicht, wenn das Gehäuse einen Einlass und einen Auslass aufweist und der Strömungsmesser im Strömungsweg zwischen Einlass und Auslass stromabwärts zum Filter angeordnet ist.

Der Strömungsmesser kann insbesondere von einer Turbine gebildet sein. Die Drehzahl der Turbine ist ein Maß für das Strömungsvolumen, welches pro Zeiteinheit durch die Turbine fließt. Diese kann in bekannter Weise mit einem Reed-Kontakt erfasst und an die Signalverarbeitungs- und Steuereinheit übertragen werden.

Jede Turbine hat einen Anlaufwiderstand. Bei sehr kleinen Strömungen, die beispielsweise durch Mikroleckage verursacht werden, wird dieser Anlaufwiderstand möglicherweise nicht überwunden. Dann dreht sich die Turbine nicht und die Mikroleckage bleibt unentdeckt. Es kann daher ein Rückflussverhinderer vor der Turbine angeordnet sein. Der Rückflussverhinderer hat einen eigenen Strömungswiderstand. Erst wenn dieser Strömungswiderstand überwunden wird, öffnet der Rückflussverhinderer und lässt eine Strömung durch, die groß genug ist, um den Anlaufwiderstand der Turbine zu überwinden. Für die Messung kleinerer Strömungsvolumen kann ein Bypass vorgesehen sein, welcher einen Teil der Strömung am Rückflussverhinderer vorbei direkt in den Bereich vor der Turbine leitet.

Vorzugsweise ist der Bypass derart ausgebildet, dass die vom Bypass auf die Turbine geleitete Teilströmung mit maximaler Kraft auf eine Turbinenschaufel auftrifft. Dann wird die Turbine bereits bei kleinen Strömungen in Rotation versetzt und der Anlaufwiderstand überwunden.

Wenn ein solcher Bypass verwendet wird, besteht die Gefahr, dass Wasser aus der Installation durch den Bypass zurückläuft, wenn der Filter gewartet werden soll. Vorzugsweise ist daher ein Schließkörper vorgesehen, welcher eine Strömung durch den Bypass in Durchflussrichtung vom Einlass in Richtung Auslass durchlässt und bei Rückfluss entgegen der Durchflussrichtung in einen Sitz gedrückt wird, so dass der Rückfluss durch den Bypass blockiert ist. Es kann hierfür ein eigenes Ventil vorgesehen sein. Besonders vorteilhaft und einfach ist es aber, wenn der Schließkörper von einem elastomeren Dichtelement gebildet wird, welche lose in einem in Strömungsrichtung öffnenden Kanalausgang oder Hohlraum des Bypasses aufliegt. Wenn die Gehäusetasse von dem übrigen Gehäuse gelöst wird, fließt das im Gehäuse befindliche Wasser durch die entstehende Öffnung nach unten ab. Durch die so entstehende Druckdifferenz wird das elastomere Dichtelement vor dem Kanalausgang oder in dem Hohlraum des Bypasses so aufgedrückt, dass der Bypass verschlossen ist. Ein Rückfluss des Wassers aus dem stromabwärtigen Teil der Installation ist nicht möglich. Der Kanalausgang oder Hohlraum kann insbesondere einen Querschnitt aufweisen, der sich in strömungsrichtung aufweitet. Ein solcher Querschnitt ist beispielsweise dreieckig.

Bei einer weiteren Ausgestaltung ist ein auslassseitiger Druckminderer vorgesehen. Der von Wasserwerken bereitgestellte Wasserdruck kann bis zu 16 bar betragen. Mit dem Druckminderer kann der Ausgangsdruck der Armatur auf einen Sollwert geregelt werden. Im Trinkwasserbereich sind beispielsweise Sollwerte von 3 bis 4 bar üblich. Dadurch wird die dahinterliegende Installation vor Überdruck geschützt.

Bei einer weiteren Ausgestaltung der Erfindung ist ein Manometer zur Erfassung und Anzeige des vom Druckminderer erzeugten Ausgangsdrucks vorgesehen. Mit dem Manometer kann der Ausgangsdruck abgelesen werden und ermöglicht ggf. eine Nachjustierung des am Druckminderer erzeugten Drucks.

Bei einer besonders bevorzugten Ausgestaltung der Erfindung wird das Manometer zusätzlich zur Anzeige verwendet, wann die Gehäusetasse drucklos ist und entfernt werden kann. Hierzu ist insbesondere ein Kolben vorgesehen, der einerseits vom Druck in der Gehäusetasse und andererseits vom Ausgangsdruck beaufschlagt ist und welcher die Verbindung zwischen Druckminderer und Manometer unterbricht, wenn der Druck in der Gehäusetasse kleiner ist als der vom Druckminderer erzeugte Ausgangsdruck. Wenn die Verbindung zwischen Druckminderer und Manometer unterbrochen ist, liegt kein Druck mehr an und das Manometer zeigt den Druck "Null" an. Dann weiß der Installateur oder die Installateurin, dass die Gehäusetasse entfernt werden kann. Der Kolben dient quasi zur Übermittlung der Druckverhältnisse in der Gehäusetasse, auch wenn das Manometer im Betrieb nicht den Druck in der Gehäusetasse, sondern den Ausgangsdruck anzeigt.

Bei einer weiteren Ausgestaltung der Erfindung ist vorgesehen, dass
(a) der Kolben in einem ersten Ende eines Kanals verschieblich geführt ist,
(b) wobei der Kanal mit dem dem Kolben abgewandten zweiten Ende in der Gehäusetasse oder einem mit der Gehäusetasse verbindbaren Stutzen des Gehäuses mündet, und
(c) das der Gehäusetasse abgewandte Ende des Kolbens im Verbindungsbereich zwischen Druckminderer und Manometer angeordnet ist.

Dabei kann insbesondere ein im Kanalinneren angeformter Anschlag zur Begrenzung der Kolbenbewegung vorgesehen sein. Der Anschlag begrenzt die Kolbenbewegung in der Weise, dass genau in dieser Position die Verbindung zwischen Ausgangsbereich des Druckminderers und Messbereich des Manometers unterbrochen ist.

Eine besonders leichte Handhabung der Anordnung wird erreicht, wenn der Filter über einen Bajonettverschluss mit dem Gehäuse verbindbar ist. Mit einem Bajonettverschluss kann die Gehäusetasse durch eine vergleichsweise geringe Drehung entfernt und installiert werden.

Vorzugsweise ist die Absperrung mit einem beweglichen Anschlagelement verbunden, welches bei geöffneter Absperrung in eine zum Lösen der Gehäusetasse erforderliche Bewegung eingreift und welches bei geschlossener Absperrung die zum Lösen der Gehäusetasse erforderliche Bewegung freigibt. Wenn die Gehäusetasse mit einer Drehbewegung, beispielsweise an einem Gewinde oder Bajonettverschluss gelöst wird, bildet das Anschlagelement einen Anschlag, welcher mit der Gehäusetasse derart zusammenwirkt, dass die Drehbewegung verhindert wird. Wird die Absperrung geschlossen, kann das Anschlagelement aus dem Bereich der Gehäusetasse entfernt werden. Dann kann die zum Lösen der Gehäusetasse erforderliche Drehbewegung durchgeführt werden. Bei alternativen Ausgestaltungen ohne Drehbewegung können aber auch andere Sicherungselemente, arretiert werden.

Bei einer konkreten Ausgestaltung der Erfindung ist vorgesehen, dass
(a) die Absperrung von einem Kugelhahn gebildet ist,
(b) die Kugel des Kugelhahns mit einer auf der Drehachse der Kugel befindlichen Spindel verbunden ist,
(c) das Anschlagelement von einer Platte, einem Stift oder einem anderen Anschlagelement gebildet ist, das in einer ersten Richtung in der Ebene senkrecht zur Drehachse der Kugel größere Abmessungen hat, als in einer zweiten Richtung in der Ebene senkrecht zur Drehachse, und
(d) das Anschlagelement bei Durchlassstellung der Kugel in eine Drehbewegung zum Lösen der Gehäusetasse eingreift und bei Drehung der Kugel in eine Absperrstellung aus dem Bereich der Gehäusetasse herausgedreht wird.

Beispielsweise kann das Anschlagelement von einer nicht-quadratischen, rechteckigen Platte gebildet sein, welche über die Spindel gemeinsam mit der Kugel um eine gemeinsame Achse gedreht wird. Zum Arretieren greift die Platte in eine Öffnung in einem Rand an der Gehäusetasse. Wenn die Kugel des Kugelhahns in eine Absperrstellung gedreht wird, wird die Platte aus der Öffnung herausgedreht. Dadurch wird die Arretierung gelöst.

Zum Auslassen des Wassers aus der Gehäusetasse kann die Gehäusetasse am unteren Ende einen absperrbaren Ablass aufweisen. Dadurch kann die Gehäusetasse und die Gehäuseteile zwischen den Absperrungen entleert werden, bevor sie gelöst wird.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig.1: ist eine perspektivische Darstellung einer Leckageschutzanordnung mit motorgesteuerter Absperrung, Filter, Druckminderer und Manometer.
- Fig.2: ist eine Seitenansicht der Anordnung aus Figur 1.
- Fig.3: ist eine Vorderansicht der Anordnung aus Figur 1.
- Fig.4: ist ein Vertikalschnitt durch die Anordnung aus Figur 1.
- Fig.5: ist ein Vertikalschnitt durch die Anordnung aus Figur 1 entlang einer Schnittebene E-E, welche in Figur 4 eingezeichnet ist und zur Schnittebene A-A um einen rechten Winkel versetzt ist.

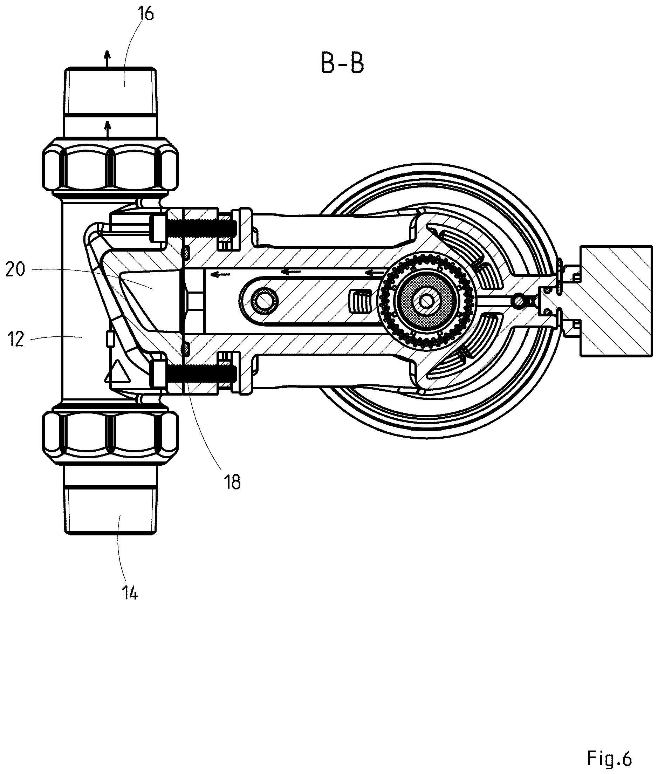

- Fig.6: ist ein Horizontalschnitt durch die Anordnung aus Figur 1 entlang einer Schnittebene B-B, die in Figur 4 eingezeichnet ist.
- Fig.7: ist ein Horizontalschnitt durch die Anordnung aus Figur 1 entlang einer Schnittebene C-C, die in Figur 4 eingezeichnet ist und etwas tiefer auf der Höhe der Arretierung liegt, als die Schnittebene B-B.

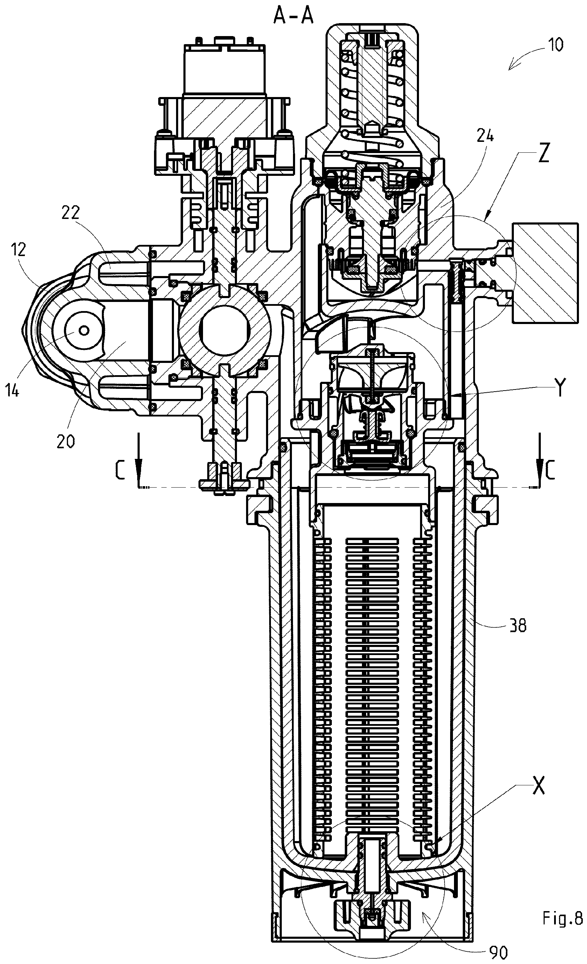

- Fig. 8: ist ein Vertikalschnitt entsprechend Figur 4 mit gelöster Arretierung.
- Fig.9: ist ein Horizontalschnitt entlang der Schnittebene C-C entsprechend Figur 7 mit gelöster Arretierung, bevor der Bajonettverschluss geöffnet wird.
- Fig. 10: zeigt die Anordnung aus Figur 9, mit geöffnetem Bajonettverschluss.
- Fig.11: zeigt ein Detail X aus Figur 8 mit geschlossenem Druckentlastungsventil.
- Fig.12: zeigt das Detail X aus Figur 11 mit geöffnetem Druckentlastungsventil.
- Fig.13: zeigt das Detail Y aus Figur 8 mit dem Bypassventil in einer Betriebsstellung.
- Fig. 14: zeigt das Detail Y aus Figur 13 mit dem geschlossenen Bypassventil.
- Fig. 15: zeigt das Detail Z aus Figur 8 in einer Betriebsstellung, bei welcher das Manometer den Ausgangsdruck anzeigt.
- Fig.16: zeigt das Detail Z aus Figur 15 in einer Wartungsstellung, bei welcher das Manometer anzeigt, dass die Gehäusetasse drucklos ist.
- Fig.17: ist eine perspektivische Ansicht einer Gehäusetasse für eine Anordnung nach Figur 1 und illustriert den Bajonettverschluss.
- Fig.18: ist eine Explosionsdarstellung der Gehäusetasse aus Figur 17 mit separatem Filterelement.

### Definitionen

In dieser Beschreibung und in den beigefügten Ansprüchen haben alle Begriffe eine dem Fachmann geläufige Bedeutung, welche der Fachliteratur, Normen insbesondere DIN EN 806-1 und DIN EN 1717 und den einschlägigen Internetseiten und Publikationen, insbesondere lexikalischer Art, beispielsweise www.Wikipedia.de, www.wissen.de oder www.techniklexikon.net, der Wettbewerber, forschenden Institute, Universitäten und Verbände, beispielsweise Deutscher Verein des Gas- und Wasserfaches e.V. oder Verein Deutscher Ingenieure, dargelegt sind. Insbesondere haben die verwendeten Begriffe nicht die gegenteilige Bedeutung dessen, was der Fachmann den obigen Publikationen entnimmt.

Weiterhin werden hier folgende Bedeutungen für die verwendeten Begriffe zugrundegelegt:
- Absperrung:: ist jede Art von Einrichtung, welche einen Fluidstrom ganz oder teilweise blockiert. Typische Absperrungen sind Kugelhähne oder Ventile.
- Armatur:: ist ein Bauteil zur Installation in oder an einer Rohrleitung oder anderen Fluidinstallation zum Absperren, Regeln oder Beeinflussen von Stoffströmen. Eine Armatur kann einteilig oder mehrteilig ausgebildet sein und wird an einer Stelle in oder an der Rohrleitung installiert. Armaturen sind beispielsweise und nicht abschließend: Anschlussvorrichtungen, Anschlussarmaturen, Hauptabsperrarmaturen, Wartungsarmaturen, Drosselarmaturen, Entnahmestellen, Entnahmearmaturen, Entleerungsarmaturen, Sicherungsarmaturen, Sicherheitsarmaturen und Stellarmaturen.
- Ausgangsdruck: Druck im Auslass und allen mit dem Auslass direkt verbundenen Bereichen innerhalb eines Gehäuses
- Auslass: ist eine ablaufseitige Öffnung in einem Gehäuse, aus welcher ein Stoffstrom herausfließen kann. Die Öffnung kann insbesondere an eine Rohrleitung oder eine weitere Armatur angeschlossen sein oder frei zur Atmosphäre hin öffnen.
- Automatik: Anordnung, die einen Vorgang selbsttätig ohne menschlichen Eingriff steuert oder regelt
- axial: ist die Richtung der Rotationsachse von ganz oder teilweise rotationssymmetrischen Bauteilen, wie etwas Rohren oder langgestreckten Gehäusen. Bei Bauteilen ohne Rotationssymmetrie ist es die Hauptströmungsrichtung in einem Bauteilabschnitt.
- Bohrung: ist jede Art von Verbindung zweier Hohlräume, sowie Sacklöcher.
- Druck: Kraft pro Flächeneinheit
- Druckminderer: ist eine Armatur zur Einstellung eines ausgewählten Drucks an dahinterliegenden Bauteilen.
- Durchgang: ist eine Verbindung, welche Stoffströme ermöglicht.
- Eingangsdruck: Druck im Einlass und allen direkt mit dem Einlass verbundenen Bereichen innerhalb eines Gehäuses.
- Einlass: ist eine zulaufseitige Öffnung in einem Gehäuse, in welchen ein Stoffstrom hineinfließen kann. Die Öffnung kann insbesondere an eine Rohrleitung oder eine weitere Armatur angeschlossen sein oder frei zur Atmosphäre hin öffnen.
- Feder: elastisches Bauteil, dass sich verformen lässt, insbesondere aber nicht ausschließlich metallische Schraubenfeder
- Filter: ist eine Einrichtung, mit welcher Feststoffe aus einem Fluidstrom zurückgehalten werden.
- Fluid: alle Stoffe, die durch geringe Kräfte deformiert werden können. Fluide werden unterteilt in Flüssigkeiten und Gase.
- Gehäuse: Begrenzung für Stoffe, Bauteile, Instrumente und Messgeräte nach außen. Ein Gehäuse kann einteilig oder aus mehreren verbundenen Gehäuseteilen mehrteilig ausgebildet sein und aus einem oder mehreren Materialien bestehen.
- Griff: nach außen ragendes Bauteil zum manuellen Halten oder Bewegen.
- Kolben: Bauteil, das zusammen mit einem umgebenden Gehäuse einen Hohlraum bildet, dessen Volumen sich durch eine Bewegung des Bauteils verändert.
- Motor: Maschine, die mechanische Arbeit verrichtet, indem sie eine Energieform, z.B. thermische, chemische oder elektrische Energie, in Bewegungsenergie umwandelt.
- Mutter: Maschinenelement zur Herstellung lösbarer Verbindungen. Die Mutter ist ein Hohlkörper mit Innengewinde.
- radial: senkrecht zu einer axialen Richtung.
- Reed-Kontakt: Kontaktzungen, beispielsweise aus einer Eisen-Nickel-Legierung, in einem abgeschlossenen Hohlraum, die magnetisch betätigt werden.
- Rohr: Hohlkörper aus zylindrischen Abschnitten. Dient üblicherweise als Rohrleitung.
- Rückflussverhinderer: Sicherungsarmatur gegen Rückfließen. Eine Vorrichtung, die dazu bestimmt ist, das Rückfließen eines Stoffstroms, entgegen einer bestimmungsgemäßen Fließrichtung zu verhindern.
- Rückspülen: Durchströmen einer Komponente oder von Filtermaterial in umgekehrter Richtung und Ablassen des Spülmediums nach außen
- Rückspülfilter: Filter, welcher durch Rückspülen gereinigt wird.
- Schulter: Übergang von Abschnitten unterschiedlicher Durchmesser oder Dicken.
- Stutzen: Rand oder Übergangsstück an einer Öffnung.
- Ventil: Bauteil zur Absperrung oder Regelung des Durchflusses von Fluiden.
- Ventilschließkörper: Bauteil, welches zum Schließen eines Ventils geeignet ist.
- Zapfstelle: (=Entnahmestelle) die Stelle, an der entweder das Trinkwasser durch den Benutzer direkt oder durch den Anschluss eines Apparates entnommen wird.

### Beschreibung der Ausführungsbeispiele

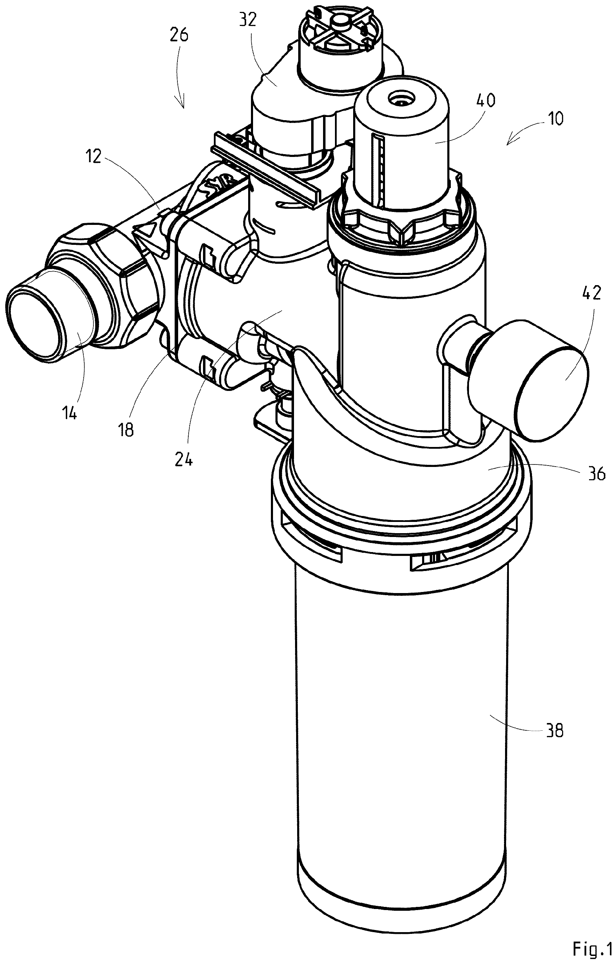

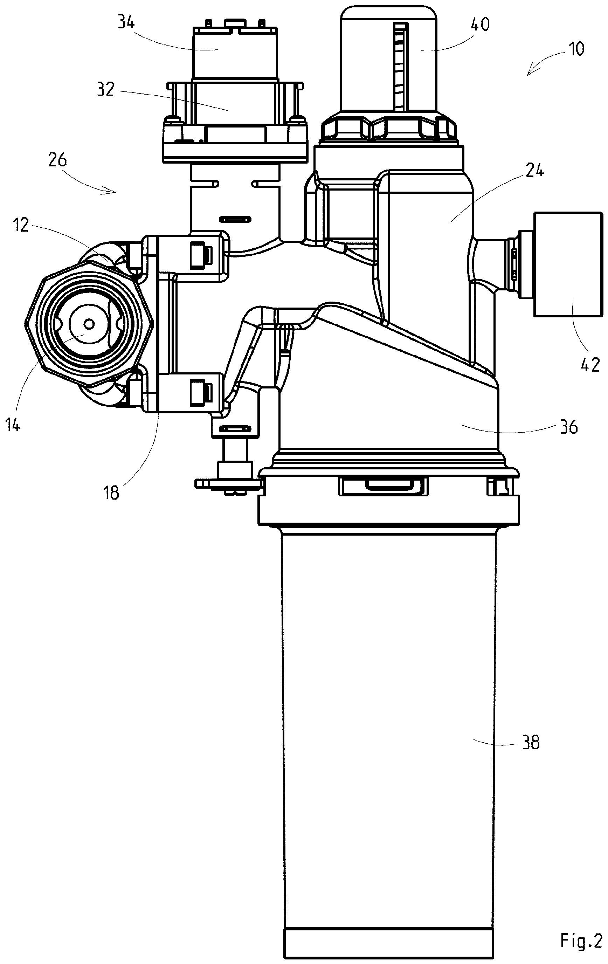

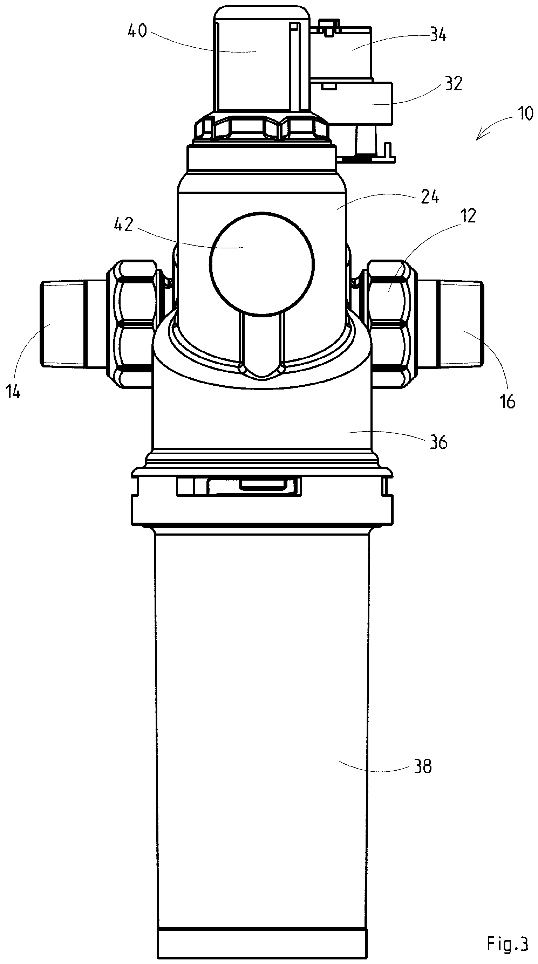

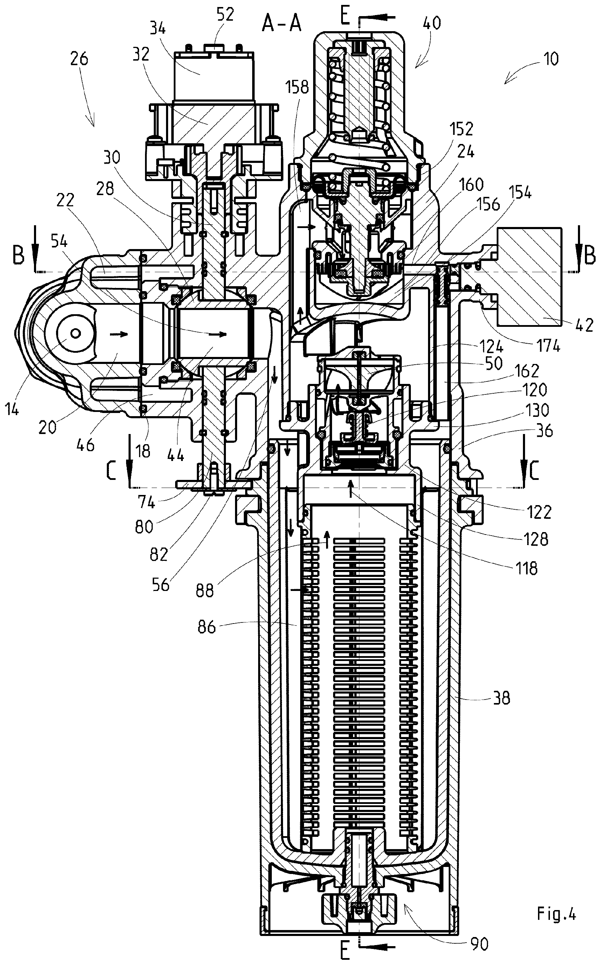

Figuren 1 bis 3 zeigt eine allgemein mit 10 bezeichnete Leckageschutzarmatur. Die Leckageschutzarmatur ist an eine Anschlussarmatur 12 mit einem Einlass 14 und einem koaxialen Auslass 16 (Fig. 3) angeflanscht. Hierfür ist die Leckageschutzarmatur 10 mit einem Flansch 18 versehen. Die Anschlussarmatur 12 ist in einer Rohrleitung (nicht dargestellt) installiert. Wasser fließt durch den Einlass 14 in einen Zentralkanal 20 (Fig. 4) in der Anschlussarmatur 12. Aus der Anschlussarmatur 12 fließt das Wasser durch einen um den Zentralkanal 20 herum angeordneten Ringkanal 22 zum Auslass 16. Es versteht sich, dass auch andere Arten der Installation möglich sind, bei denen Einlass und Auslass beispielsweise direkt an der Leckageschutzarmatur 10 angeformt sind oder der Einlass mit dem Ringkanal und der Auslass mit dem Zentralkanal verbunden sind.

Die Leckageschutzarmatur 10 weist ein Gehäuse 24 auf. Die Leckageschutzarmatur 10 ist mit einer stromaufwärtigen Absperrung in Form eines Kugelhahns 26 mit Kugel 28 (Fig.4) versehen. Der Kugelhahn 26 wird über eine Spindel 30 mit einem Motor 32 betrieben. Der Motor 32 wird von einer Steuereinheit 34 gesteuert.

An einem nach unten ragenden Stutzen 36 des Gehäuses 24 ist eine Gehäusetasse 38 mit einem nachstehend näher erläuterten Filter befestigt. Das gefilterte Wasser wird mit einem Druckminderer 40 auf einen geregelten Ausgangsdruck geregelt. Ein Manometer 42 zeigt den Ausgangsdruck an.

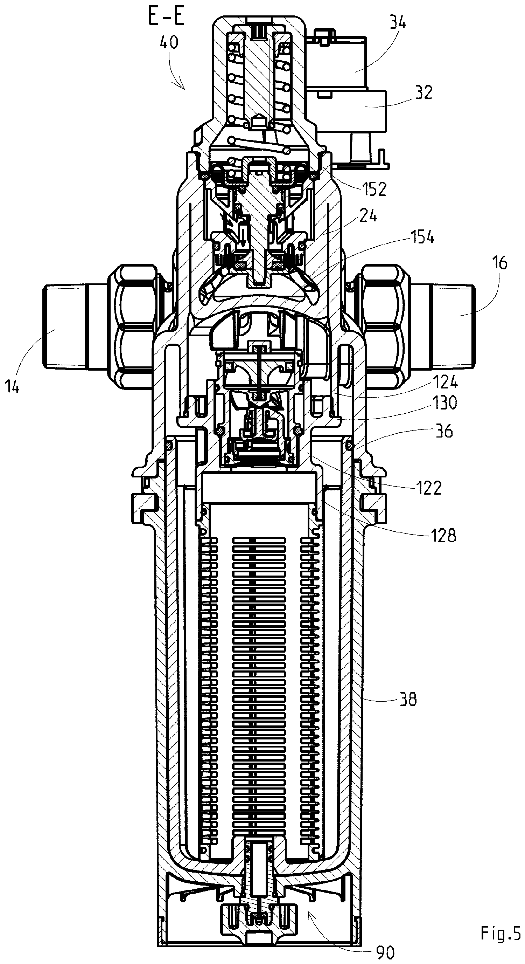

Figur 4 und 5 zeigen den Aufbau der Leckageschutzarmatur 10 im Detail. Ein Zentralkanal 44 im Gehäuse 24 fluchtet mit dem Zentralkanal 20. Ein Ringkanal 46 im Gehäuse 24 fluchtet mit dem Ringkanal 22. Die Kugel 28 des Kugelhahns 26 kontrolliert den Durchfluss durch den Zentralkanal 44. Figur 4 zeigt den Kugelhahn 26 in geöffneter Stellung. Wasser kann durch die Kugel 28 hindurch fließen. Die Kugel 28 ist formschlüssig mit der Spindel 30 verbunden. Die Spindel 30 ist mit dem Motor 32 verbunden. Die Steuereinheit 34 ist mit Signalen einer Turbine 50 beaufschlagt, welche die den Volumenstrom durch die Leckageschutzarmatur stromabwärts des Filters erfasst.

Die Steuereinheit 34 ist mit einem Prozessor mit einem Auswerteprogramm versehen, welches ermittelt, ob ungewöhnliche oder unerwünschte Strömungszustände vorliegen. Das kann eine langanhaltende, kleine Strömung sein. Diese deutet auf Mikroleckage hin. Das kann eine plötzliche, sehr große Strömung sein. Diese deutet auf einen Rohrbruch hin. Wenn solche oder andere unerwünschte oder ungewöhnliche Strömungszustände vorliegen, können Alarmsignale generiert werden. Ferner kann ein Steuersignal an den Motor 32 gesendet werden, mit welchem der Kugelhahn 26 geschlossen wird. Die Steuereinheit 34 weist eine Internetverbindung oder eine Verbindung zu einem sonstigen Netzwerk auf, über welche Einstellungen an der Steuereinheit 34 vorgenommen werden können. Hierzu kann beispielsweise ein Programm auf einem PC mit Internetanschluss oder eine Application auf einem Smartphone verwendet werden. Die Der Kugelhahn 26 kann auf diese Weise ferngesteuert bedient werden.

Ein Betätigen des Kugelhahns 26 kann auch direkt am Gerät 10 erfolgen. Hierzu ist ein Knopf 52 an der Steuerung 34 vorgesehen. Es versteht sich, dass auch ein anderes Betätigungselement, etwa Touchdisplay, Drücker, Schalter oder dergleichen vorgesehen sein kann. Die Auswertung von Signalen und Ermittlung von untypischen und unerwünschten Strömungszuständen ist aus dem Stand der Technik wohlbekannt und braucht hier nicht näher erläutert werden.

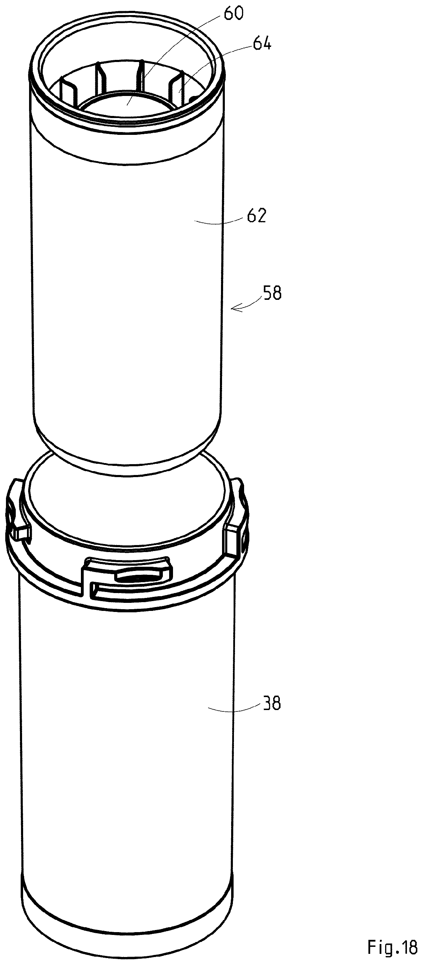

Wasser, welches in Richtung der Pfeile 54 durch den Zentralkanal 44 und durch die Kugel 28 fließt gelangt in Richtung der Pfeile 56 in den äußeren Stutzen 36. An dem äußeren Stutzen 36 ist die Gehäusetasse 38 befestigt. Die Gehäusetasse 38 ist aus Kunststoff. Im vorliegenden Ausführungsbeispiel ist ein zylindrisches Austauschfilterelement 58 vorgesehen, welches konzentrisch in der Gehäusetasse 38 angeordnet ist. Das Austauschfilterelement 58 besteht aus einer wasserundurchlässigen Innentasse 62 und einem konzentrisch darin angeordneten Siebelement 60, das über Rippen 64 in der Innentasse 62 gehalten ist. Dies ist in Figur 18 gut zu erkennen. Figur 4 zeigt, dass die Innentasse 62 nach oben über den Rand der Gehäusetasse 38 hinaus bis in den äußeren Stutzen 36 ragt und dort abgedichtet ist. Es kann also kein Wasser zwischen die Gehäusetasse 38 und die Innentasse 62 des Austauschfilterelements 58 gelangen.

Wasser fließt in Richtung der Pfeile 56 durch den Stutzen 36 nach unten in den Bereich zwischen Innentasse 62 und Siebelement 60. Von dem dazwischen gebildeten Ringraum 86 fließt das Wasser durch das Siebelement 60 nach innen. Dabei bleiben Partikel im Siebelement 60 hängen. Das Wasser wird gefiltert. Im Inneren des Siebelements 60 fließt das Wasser in Richtung der Pfeile 88 nach oben zurück in das übrige Gehäuse 24. Wenn das Siebelement verschmutzt ist, muss es ausgetauscht und/oder gereinigt werden. Für eine solche Wartung wird die Gehäusetasse 38 entfernt.

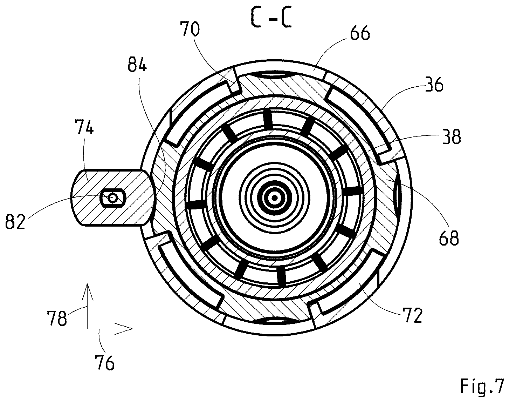

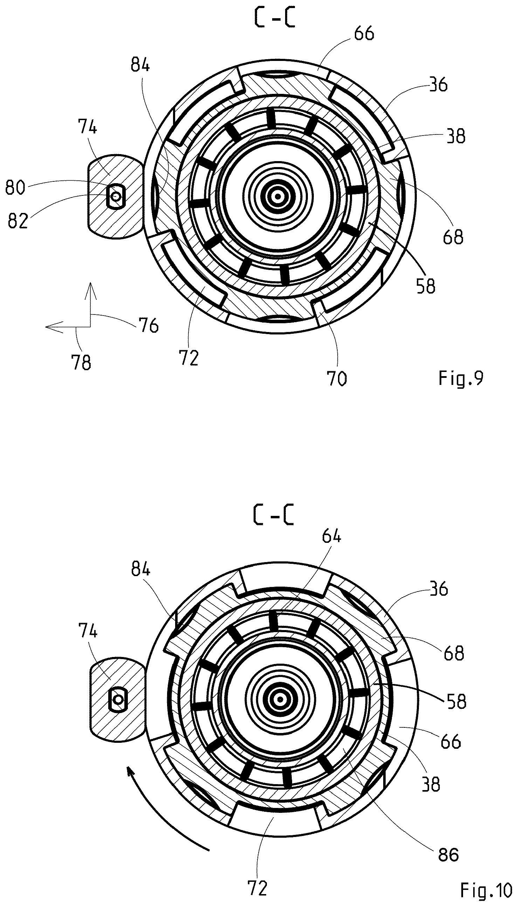

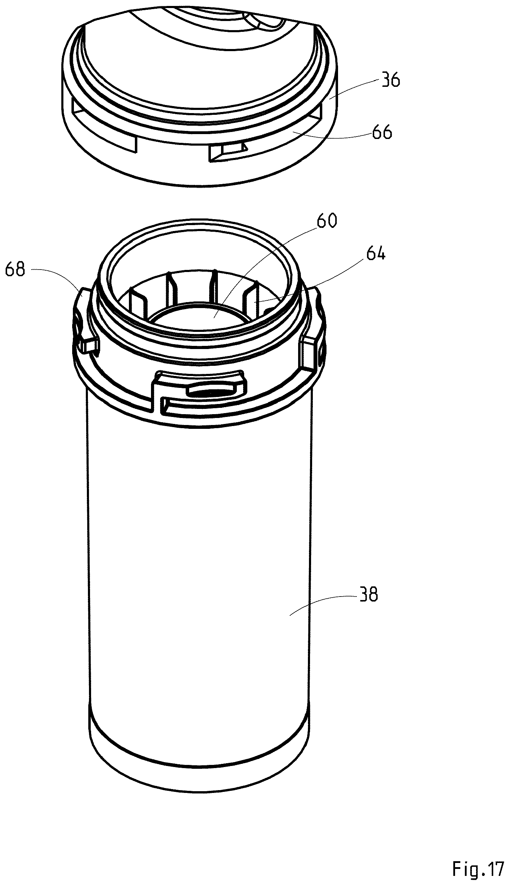

Zum Befestigen und Lösen der Gehäusetasse 38 ist im vorliegenden Ausführungsbeispiel ein Bajonettverschluss vorgesehen, der in Figuren 7, 9 und 10 und in Figur 17 illustriert ist. Der Gehäusestutzen 36 ist mit mehreren, beabstandeten Ausnehmungen 66 versehen, die sich in Umfangsrichtung am unteren Rand des Stutzens 36 erstrecken. Die Gehäusetasse 38 weist korrespondierende, beabstandete Vorsprünge 68 auf. Die Vorsprünge erstrecken sich am oberen Rand der Gehäusetasse 38 ebenfalls in Umfangsrichtung. Zum Befestigen wird die Gehäusetasse 38 von unten in den Stutzen 36 gesteckt. Dabei ist der Winkel so gewählt, dass die Vorsprünge 68 durch zugehörige Nuten 72 im inneren Rand des Stutzens geführt werden. Dies ist in Figur 9 zu erkennen. Durch Drehung der Gehäusetasse 38 um einen Winkel von etwa 45° werden die Vorsprünge in den Ausnehmungen 66 soweit bewegt, dass sie auf dem unteren Rand der Ausnehmungen 66 aufliegen. Diese Position ist in Figur 10 dargestellt. Dann kann die Gehäusetasse 38 nicht mehr abgezogen werden. Die Drehbewegung ist durch Anschläge 70 begrenzt.

Die Gehäusetasse 38 soll nur dann von dem übrigen Gehäuse 24 entfernt werden, wenn sichergestellt ist, dass der Kugelhahn 26 gut verschlossen ist. Zu diesem Zweck ist eine Arretierung zum Arretieren des Bajonettverschlusses vorgesehen. Die Arretierung wird im vorliegenden Ausführungsbeispiel von einer Platte 74 gebildet. Die Platte 74 hat in einer Richtung 76 größere Abmessungen als in einer zweiten, dazu senkrechten Richtung 78 (Fig.7). Die kurze Seite der Platte ist abgerundet.

Über eine Spindel 80 ist die Platte 74 mit der Kugel 28 des Kugelhahns 26 verbunden. Hierzu ist das Gehäuse 24 mit einem Durchbruch versehen. Die Spindel 80 ist mit Dichtungen versehen und von der Kugel 28 nach unten durch den Durchbruch nach außen geführt. Dies ist in Figur 4 gut zu erkennen.

Die Platte 74 ist mit einer kleinen Schraube 82 von unten am Ende der Spindel 80 befestigt. Im Betrieb ragt ein Ende der Platte 74 durch die Ausnehmung 66 des Stutzens 36 in eine abgerundete Ausnehmung 84 im Vorsprung 68. Die Krümmungsradien der kurzen Seite der Platte 74 entspricht dem Krümmungsradius der Ausnehmung 84. Dies ist in Figur 4 und 7 illustriert. Wenn die Gehäusetasse 38 bis zum Anschlag 70 gedreht ist, kann die Platte 74 in die Ausnehmung 84 hinein- und hinausbewegt wird. Wenn die Platte 74 in die Ausnehmung 84 eingreift, wird verhindert, dass die Gehäusetasse 38 gedreht wird. Sie kann nicht entfernt werden.

Wenn der Kugelhahn 26 geschlossen wird, dreht sich die Kugel 28. Mit der Kugel 28 wird die Spindel 80 und die Platte 74 ebenfalls gedreht. Dabei wird der in Längsrichtung 76 in die Ausnehmung 84 ragende Teil der Platte 74 aus der Ausnehmung herausgedreht. Dies ist in Figur 9 illustriert. Wenn der Kugelhahn 26 vollständig verschlossen ist, kann der Bajonettverschluss geöffnet und die Gehäusetasse 38 entfernt werden. Dies ist in Figur 10 illustriert. Da die Platte für die Arretierung und die Kugel 28 fest miteinander verbunden sind, kann die Gehäusetasse 38 nur dann entfernt werden, wenn der Kugelhahn 26 geschlossen ist.

Statt einer flachen Platte kann auch jede andere Art der Arretierung verwendet werden, etwa ein Stift. Auch kann eine magnetische Arretierung, oder eine andere elektronisch betätigbare Arretierung verwendet werden. Die Befestigung ist nicht auf Bajonettverschlüsse beschränkt. Auch ein herkömmliches Gewinde mit Anschlag oder eine Überwurfmutter oder dergleichen können verwendet werden. Wichtig ist lediglich, dass die Arretierung mit der Absperrung gekoppelt ist.

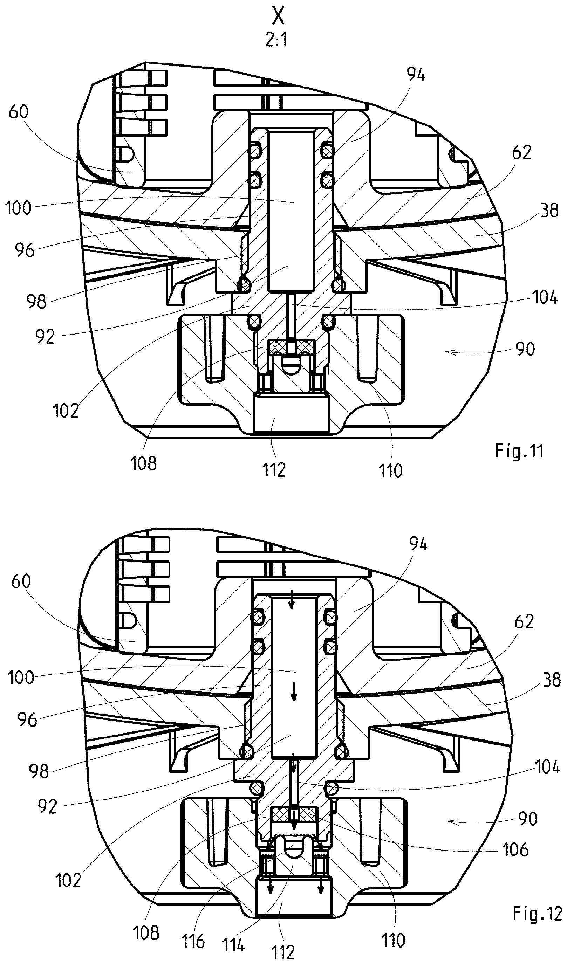

Am unteren Ende der Gehäusetasse 38 ist ein allgemein mit 90 bezeichnetes Druckentlastungsventil vorgesehen. Das Druckentlastungsventil 90 ist in Figur 11 und Figur 12 noch einmal im Detail dargestellt. Figur 11 zeigt das Druckentlastungsventil 90 in geschlossenem Zustand und Figur 12 in geöffnetem Zustand. Durch Öffnen des Druckentlastungsventils 90 kann Wasser abgelassen werden, bevor die Gehäusetasse 38 mit dem Austauschfilterelement 58 für Wartungszwecke entfernt werden.

Die Gehäusetasse 38 weist am unteren Ende einen Durchbruch 92 auf. Ein mit dem Durchbruch fluchtender Kanalabschnitt 94 ist innen an den Boden der Innentasse 62 angeformt. Der Kanalabschnitt 94 erstreckt sich bis in das Innere des Siebelements 60. Ein Auslasskörper 96 ist mit einem Außengewinde 98 in den Durchbruch 92 im Boden der Gehäusetasse 38 eingeschraubt. Der Auslasskörper 96 ist im oberen Bereich rohrförmig ausgebildet und erstreckt sich koaxial durch einen von dem Kanalabschnitt 94 gebildeten Kanal 100. Zwei Dichtringe dichten den Auslasskörper 96 gegen die Innenwandung des Kanalabschnitts 94 ab.

Im unteren Bereich schließt der rohrförmige Teil des Auslasskörpers 96 mit einem Boden 102 ab. Auf Höhe unterhalb des Bodens 102 mündet der Kanal 100 in einem Kanal 104 mit geringem Durchmesser. Der Kanal 104 erstreckt sich nach unten und bildet am unteren Ende des Auslasskörpers 96 mit einer Dichtung 106 einen gehäusefesten Ventilsitz des Druckentlastungsventils 90.

Um den Ventilsitz herum ist ein nach unten ragender Ring 108 mit einem Außengewinde an den Auslasskörper 96 angeformt. Auf den Ring 108 ist ein Drehgriff 110 aufgeschraubt. Der Drehgriff ist mit einer axialen Mittenbohrung 112 versehen. Rippen halten einen Ventilschließkörper 114 mit einer Querbohrung 116. Durch Drehen des Drehgriffs 110 wird der Ventilschließkörper 114 nach oben und unten bewegt. In der in Figur 11 gezeigten Stellung drückt der Ventilschließkörper 114 mit einem Vorsprung in die Dichtung 106. Dann ist das Ventil geschlossen und es kann kein Wasser nach unten ablaufen. In der in Figur 12 gezeigten Stellung ist der Ventilschließkörper etwas weiter unten. Dann fließt Wasser am Ventilschließkörper 114 vorbei in Richtung der Pfeile durch die Mittenbohrung 112 nach außen. Anders als bei einem einfachen Stopfen kann das Druckentlastungsventil 90 hohen Drücken widerstehen.

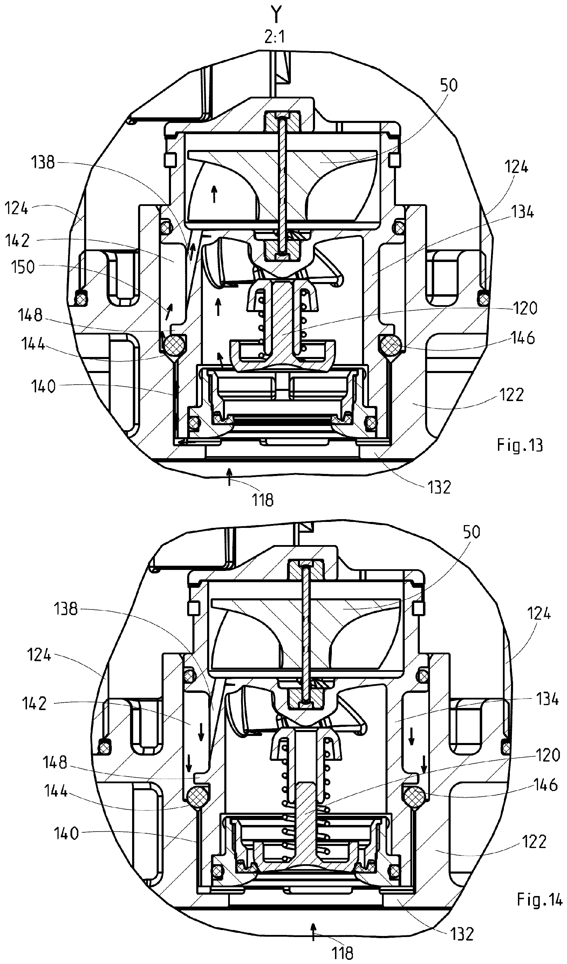

Das gefilterte Wasser fließt vom Filter in Richtung der Pfeile 118 nach oben (Fig.4). Dort ist ein Rückflussverhinderer 120 im Strömungsweg angeordnet. Der Rückflussverhinderer 120 und die im Strömungsweg dahinter angeordnete Turbine 50 sind in den Figuren 13 und 14 im Detail dargestellt.

Das Gehäuse 24 bildet einen zum äußeren Stutzen 36 koaxialen Gehäuseinnenstutzen 124. Zwischen dem Stutzen 36 und dem Gehäuseinnenstutzen 124 ist ein Ringraum gebildet, der wie oben beschrieben mit dem Einlass 14 in Verbindung steht. Ein Einsatzteil 122 erstreckt sich vom unteren Bereich des Gehäuseinnenstutzens 124 bis zum Siebelement 60. Das Einsatzteil 122 ist abschnittsweise rohrförmig. Es weist einen nach unten ragenden Verbindungsstutzen 128 auf, in welchen der obere Rand des Siebelements 60 eingesteckt und mit einer Dichtung abgedichtet ist. Nach oben erstreckt sich das Einsatzteil 122 bis in den Gehäuseinnenstutzen 124. Dies ist in Figur 4 und 5 gut zu erkennen. Ein im Querschnitt L-förmiger äußerer Gewinderand 130 des Einsatzteils 122 ist in den Gehäuseinnenstutzen 124 eingeschraubt und mit einer Dichtung abgedichtet. Der Ringraum zwischen Stutzen 36 und Gehäuseinnenstutzen 124 ist so vom Ringraum zwischen Einsatzteil 122 und Gehäuseinnenstutzen 124 getrennt.

Im Übergangsbereich zwischen dem nach unten ragenden Verbindungsstutzen 128 des Einsatzteils 122 und dem in das Gehäuse 24 ragenden Teil bildet das Einsatzteil 122 einen nach innen ragenden Rand 132. Dieser ist in Figur 13 gut zu erkennen. Auf dem Rand sitzt ein patronenförmiges Turbinengehäuse 134, in welchem die Turbine 50 und der zur Turbine 50 stromaufwärtige Rückflussverhinderer 120 angeordnet sind.

Eine Turbine 50 hat einen Anlaufwiderstand. Bei besonders kleinen Strömungsvolumen, wie sie für Minileckage typisch sind, wird der Anlaufwiderstand nicht überwunden. Die Strömung passiert die Turbine 50 ohne diese in Bewegung zu versetzen. Der Rückflussverhinderer 120 ist daher davorgeschaltet, so dass nur Strömungsvolumen, die groß genug sind um den Rückflussverhinderer 120 zu öffnen zur Turbine geleitet werden. Dadurch wird sichergestellt, dass Strömungsvolumen ab einem durch den Öffnungswiderstand des Rückflussverhinderers bestimmten Schwellwert sicher erfasst werden.

Für die Erfassung kleinerer Strömungen, welche den Anlaufwiderstand der Turbine 50 nicht ohne weiteres überwinden ist ein Bypass vorgesehen. Der Bypass umfasst einen Ringraum 140 zwischen Einsatzteil 122 und Turbinengehäuse 134 und einen Bypasskanal 138, der den Ringraum 140 außerhalb des Turbinengehäuses mit dem Bereich innerhalb des Turbinengehäuses 134 zwischen Rückflussverhinderer 120 und Turbine 50 verbindet. Der Bypasskanal 138 ist derart ausgerichtet, dass er die Strömung mit maximaler Kraft auf die davor angeordnete Turbinenschaufel gelangt. Dadurch kann die Turbine 50 auch bei kleineren Strömungsvolumen in Rotation versetzt werden.

Zwischen Ringraum 140 und Bypasskanal 138 ist der Zwischenraum zwischen Turbinengehäuse 134 und Einsatzteil 122 verbreitert. Dadurch entsteht ein Ringraum 142, welcher den Ringraum 140 und den Bypasskanal 138 verbindet. Im Übergangsbereich zwischen Ringraum 140 und Ringraum 142 weitet sich der Bypass auf, so dass ein Bereich 144 mit dreieckigem Querschnitt gebildet ist. In dem aufgeweiteten Bereich 144 befindet sich lose beweglich ein elastomeres Dichtelement 146. Ein Ringvorsprung 148 außen an dem Turbinengehäuse 134 hält das elastomere Dichtelement 146 in dem Bereich 144.

Wenn Wasser von unten in Richtung der Pfeile 150 durch den Bypass 140, 142 und 138 fließt, wird die Dichtung 146 leicht nach oben gedrückt und das Wasser kann passieren. Bei einer Druckdifferenz zwischen Filter und Auslass wird die Dichtung 146 in den von dem Bereich 144 gebildeten Sitz gedrückt. Es kann kein Wasser vom Auslass durch den Bypass 140, 142 und 138 zurück fließen. Die Dichtung 146 wirkt als Ventilschließkörper für den Bypass. Auf diese Weise wird bei Verwendung eines Bypasses sichergestellt, dass die Turbine 50 auch bei geringen Strömungen dreht und ein Signal erfasst werden. Gleichzeitig kann aber kein Wasser durch den Bypass zurückfließen, wenn der Filter bestehend aus Gehäusetasse und Filterelement beispielsweise zu Wartungszwecken entfernt werden soll.

Die Strömungsmessung erfolgt in bekannter Weise mit der Turbine 50 und einem gehäusefesten Reedkontakt. Das Signal des Reedkontakts wird an die Steuer- und Auswerteeinheit übertragen und dort weiterverarbeitet.

Von der Turbine 50 fließt das Wasser durch den Druckminderer 40 und wird auf einen gewünschten Druck geregelt. Der Ausgangsbereich 156 des Druckminderers 40 steht mit dem Ringkanal 46 in Verbindung, durch welchen das Wasser zum Auslass 16 fließt. Der Druckminderer 40 ist als Druckminderereinsatz ausgebildet, der in einen nach oben ragenden Gehäusestutzen 152 eingesetzt ist. Ein Boden 154 trennt den Ausgangsbereich 156 des Druckminderers 40 vom stromabwärtigen Bereich der Turbine 50. Der Boden 154 ist topfförmig ausgebildet, wobei seitlich ein vertikaler Kanal 158 gebildet ist, der in Figur 4 gut zu erkennen ist. Über den Kanal 158 fließt das Wasser in Richtung der Pfeile zum Eingangsbereich des Druckminderers 40. Wenn das Ventil des Druckminderers 40 öffnet, etwa weil der Ausgangsdruck abfällt, fließt Wasser durch das Ventil des Druckminderers 40 zum Ausgangsbereich 156.

Der Druck im Ausgangsbereich 156 des Druckminderers 40 wird im Betrieb mit einem Manometer 42 erfasst. Das Manometer 42 sitzt an einem seitlichen Gehäusestutzen 174. Über eine horizontale Verbindung in Form eines Kanals 160 zwischen Manometer 42 und Ausgangsbereich 156 wird der Druck an das Manometer 42 übertragen.

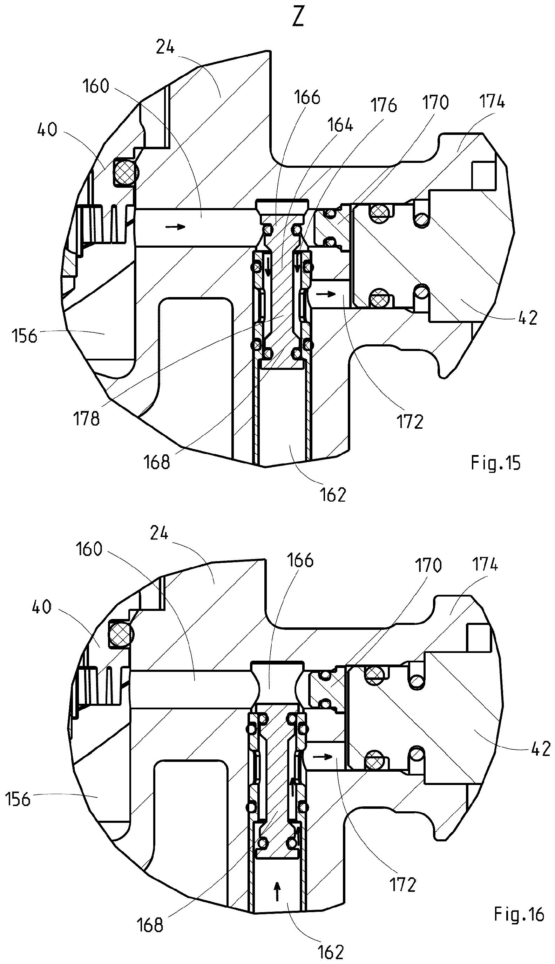

Figur 15 und 16 zeigen, wie der Installateur erkennen kann, dass der Filterbereich innerhalb der Gehäusetasse 38 drucklos ist, so dass die Gehäusetasse 38 nach Lösen der Arretierung gefahrlos entfernt und beispielsweise gewartet werden kann. Hierzu ist ein vertikaler Verbindungskanal 162 zwischen dem Inneren des Filterelements 58 und des Kanals

160 zwischen Manometer 42 und Ausgangsbereich 156 des Druckminderers 40 vorgesehen. Dies ist in Figur 4 illustriert.

Das obere Ende des Verbindungskanals 162 mündet im Kanal 160. Der Kanal 160 zwischen Ausgangsbereich 156 und Manometer 42 verläuft im Wesentlichen horizontal und ist am manometerseitigen Ende mit einem Stopfen 170 verschlossen. Parallel zu dem mit dem Stopfen 170 verschlossenen Ende des Kanals 160 verbindet ein Kanalabschnitt 172 den Verbindungskanal 162 mit dem Manometer.

In dem Verbindungskanal 162, der im vorliegenden Ausführungsbeispiel rechts in Figur 4 in senkrechter Richtung verläuft, ist ein Kolben 164 mit knochenartig verdickten Enden 166 und 168 geführt. Der Kolben ist in Figur 15 und Fig. 16 noch einmal im Detail dargestellt. Die Enden 166 und 168 sind mit Dichtungen gegen den Verbindungskanal 162 abgedichtet.

Im Betrieb ist der auch im Filterelement 58 herrschende Eingangsdruck höher als der Ausgangsdruck des Druckminderers 40 im Ausgangsbereich 156. Der von unten auf den Kolben 164 wirkende Druck ist folglich höher als der von oben auf den Kolben 164 wirkende Druck. Der Kolben 164 befindet sich daher im Betrieb in einer oberen Stellung. Diese ist in Figur 15 dargestellt. In der Betriebsstellung erstreckt sich das obere verdickte Ende 166 des Kolbens 164 vollständig in den Kanal 160. Der Ausgangsdruck liegt daher entsprechend den Pfeilen 176 im Bereich um das verdickte Ende 166, im Zwischenraum um den verjüngten Bereich 178 des Kolbens 164 und über den Kanalabschnitt 172 am Manometer an. Das untere verdickte Ende 168 des Kolbens 164 befindet sich in der Betriebsstellung im Bereich einer Verjüngung des Verbindungskanals 162, die auch einen Anschlag bildet. Es besteht keine Verbindung zum Verbindungskanal 162. Diese ist in dieser Stellung des Kolbens 164 blockiert. Entsprechend liegt an dem Manometer 42 in der Betriebsstellung Ausgangsdruck an.

Wenn nach Schließen des Kugelhahns 26 durch das Entlastungsventil 90 Wasser zu Wartungszwecken aus der Gehäusetasse 38 abgelassen wird, sinkt der Druck im Bereich des Filterelements 58 und entsprechend im Verbindungskanal 162. Wenn der Druck im Verbindungskanal 162 unter den Druck im Ausgangsbereich 156 hinter dem Druckminderer 40 absinkt, wird der Kolben 164 nach unten bewegt. Diese Wartungstellung ist in Figur 16 dargestellt. Der obere, verdickte Teil des Kolbens 164 verschließt nun das obere Ende des Verbindungskanals 162. Es kann kein Wasser vom Ausgangsbereich 156 zum Manometer 42 fließen. Der Kanalabschnitt 172 vor dem Manometer 42 befindet sich in der Wartungsstellung auf Höhe des verjüngten Teils des Kolbens 164. Es besteht eine Verbindung über den Bereich um den unteren, verdickten Teil des Kolbens, der in dieser Stellung mit dem Bereich um den verjüngten Teil des Kolbens verbunden ist. Von dort besteht über den Kanalabschnitt 172 eine Verbindung zum Manometer 42. Der am Manometer 42 anliegende Druck entspricht nun dem Druck im Bereich des Filterelement 58. Es kann also am Manometer 42 abgelesen werden, wann im Filterelement 58 Atmosphärendruck herrscht und die Gehäusetasse 38 gefahrlos gelöst werden kann.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

Die oben erläuterten Ausführungsbeispiele dienen der Illustration der in den Ansprüchen beanspruchten Erfindung.

Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll.

Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

## Patentansprüche

1. Leckageschutz-Anordnung (10) zum Einbau in einer Wasserinstallation vor einer oder mehreren Zapfstellen enthaltend
(a) ein Gehäuse (24);
(b) eine Absperrung (26) zum Unterbrechen der Wasserzufuhr in der Wasserinstallation; und
(c) einen Filter (58), welcher in einer lösbar an dem Gehäuse befestigbaren Gehäusetasse (38) angeordnet ist;
**gekennzeichnet, durch**
(d) eine Arretiervorrichtung (74) zum Arretieren der Gehäusetasse in einer am Gehäuse fixierten Position, wobei
(e) die Arretierung durch Betätigung der Absperrung lösbar ist.

2. Anordnung nach Anspruch 1, **gekennzeichnet durch** ein Steuergerät (34) mit einer von den Signalen eines Strömungsmessers (50) beaufschlagten Signalverarbeitungseinrichtung zum Ermitteln untypischer und/oder unerwünschter Strömungsverhältnisse in der Wasserinstallation und zum Betätigen der Absperrung (26).

3. Anordnung nach Anspruch 2, **dadurch gekennzeichnet, dass** das Gehäuse (24) einen Einlass (14) und einen Auslass (16) aufweist und der Strömungsmesser (50) im Strömungsweg zwischen Einlass und Auslass stromabwärts zum Filter (58) angeordnet ist.

4. Anordnung nach Anspruch 3, **dadurch gekennzeichnet, dass** der Strömungsmesser von einer Turbine (50) gebildet ist.

5. Anordnung nach Anspruch 4, **dadurch gekennzeichnet, dass** ein Rückflussverhinderer (120) vor der Turbine (50) angeordnet ist.

6. Anordnung nach Anspruch 5, **dadurch gekennzeichnet, dass** ein Bypass (138, 140) vorgesehen ist, welcher einen Teil der Strömung am Rückflussverhinderer (120) vorbei direkt in den Bereich vor der Turbine (50) leitet.

7. Anordnung nach Anspruch 6, **dadurch gekennzeichnet, dass** der Bypass (138, 140) derart ausgebildet ist, dass die vom Bypass auf die Turbine (50) geleitete Teilströmung mit maximaler Kraft auf eine Turbinenschaufel auftrifft.

8. Anordnung nach Anspruch 6 oder 7, **gekennzeichnet durch** einen Schließkörper (146), welcher eine Strömung durch den Bypass (138, 140) in Durchflussrichtung vom Einlass (14) in Richtung Auslass (16) durchlässt und bei Rückfluss entgegen der Durchflussrichtung in einen Sitz (144) gedrückt wird, so dass der Rückfluss durch den Bypass (138, 140) blockiert ist.

9. Anordnung nach Anspruch 8, **dadurch gekennzeichnet, dass** der Schließkörper (146) von einem elastomeren Dichtelement gebildet wird, welche lose an einem in Strömungsrichtung öffnenden Kanalausgang oder Hohlraum des Bypasses (138) aufliegt.

10. Anordnung nach einem der vorgehenden Ansprüche, **gekennzeichnet durch** einen auslassseitigen Druckminderer (40).

11. Anordnung nach Anspruch 10, **gekennzeichnet durch** ein Manometer (42) zur Erfassung und Anzeige des vom Druckminderer (40) erzeugten Ausgangsdrucks.

12. Anordnung nach Anspruch 11, **gekennzeichnet durch** einen Kolben (164), der einerseits vom Druck in der Gehäusetasse (38) und andererseits vom Ausgangsdruck beaufschlagt ist und welcher die Verbindung zwischen Druckminderer (40) und Manometer (42) unterbricht, wenn der Druck in der Gehäusetasse kleiner ist als der vom Druckminderer erzeugte Ausgangsdruck.

13. Anordnung nach Anspruch 12, **dadurch gekennzeichnet, dass**
(a) der Kolben (164) in einem ersten Ende (166) eines Kanals (162) verschieblich geführt ist,
(b) wobei der Kanal mit dem Kolben abgewandten zweiten Ende (168) in der Gehäusetasse (38) oder einem mit der Gehäusetasse verbindbaren Stutzen des Gehäuses mündet, und
(c) das der Gehäusetasse abgewandte Ende des Kolbens im Verbindungsbereich zwischen Druckminderer (40) und Manometer (42) angeordnet ist.

14. Anordnung nach Anspruch 13, **gekennzeichnet durch** einen im Kanalinneren angeformten Anschlag zur Begrenzung der Kolbenbewegung.

15. Anordnung nach einem der vorgehenden Ansprüche, **dadurch gekennzeichnet, dass** der Filter (58) über einen Bajonettverschluss mit dem Gehäuse (24) verbindbar ist.

16. Anordnung nach einem der vorgehenden Ansprüche, **dadurch gekennzeichnet, dass** die Absperrung (26) mit einem beweglichen Anschlagelement (74) verbunden ist, welches bei geöffneter Absperrung in eine zum Lösen der Gehäusetasse erforderliche Bewegung eingreift und welches bei geschlossener Absperrung die zum Lösen der Gehäusetasse erforderliche Bewegung freigibt.

17. Anordnung nach Anspruch 16, **dadurch gekennzeichnet, dass**
(a) die Absperrung (26) von einem Kugelhahn gebildet ist,
(b) die Kugel (28) des Kugelhahns mit einer auf der Drehachse der Kugel befindlichen Spindel (80) verbunden ist,
(c) das Anschlagelement von einer Platte (74), einem Stift oder einem anderen Anschlagelement gebildet ist, das in einer ersten Richtung in der Ebene senkrecht zur Drehachse der Kugel größere Abmessungen hat, als in einer zweiten Richtung in der Ebene senkrecht zur Drehachse, und
(d) das Anschlagelement bei Durchlassstellung der Kugel in eine Drehbewegung zum Lösen der Gehäusetasse (38) eingreift und bei Drehung der Kugel in eine Absperrstellung aus dem Bereich der Gehäusetasse herausgedreht wird.

18. Anordnung nach einem der vorgehenden Ansprüche, **dadurch gekennzeichnet, dass** die Gehäusetasse (38) am unteren Ende einen absperrbaren Ablass aufweist.

## Claims

1. Leakage protection assembly (10) for the installation in a water installation upstream of one or more taps, comprising
(a) a housing (24);
(b) a stop valve (26) for interrupting the water supply in the water installation; and
(c) a filter (58) accommodated in a housing cup (38) which is releasably fixed to the housing;
**characterized by**
(d) a locking device (74) for locking the housing cup in a fixed position at the housing, wherein
(e) the locking is releasable by operating the stop valve.

2. Assembly according to claim 1, **characterized by** a control device (34) with a signal processing unit receiving the signals of a flow meter (50) for determining untypical and/or undesired flow conditions in the water installation and for operating the stop valve (26).

3. Assembly according to claim 2, **characterized in that** the housing (24) is provided with an inlet (14) and an outlet (16) and the flow meter (50) is positioned in the flow path between the inlet and the outlet downstream of the filter (58).

4. Assembly according to claim 3, **characterized in that** the flow meter is formed by a turbine (50).

5. Assembly according to claim 4, **characterized in that** a backflow preventer (120) is positioned upstream of the turbine (50).

6. Assembly according to claim 5, **characterized in that** a bypass (138, 140) is provided which guides a portion of the flow bypassing the backflow preventer (120) directly into the range upstream of the turbine (50).

7. Assembly according to claim 6, **characterized in that** the bypass (138, 140) is designed in such a way that the portion of the flow guided towards the turbine hits a turbine blade with maximum force.

8. Assembly according to claim 6 or 7, **characterized by** a closing body (146) letting a flow pass through the bypass (138, 140) in the flow direction from the inlet (14) towards the outlet (16) and is pushed into a seat (144) when there is a backflow against such flow direction, whereby the backflow through the bypass (138, 140) is blocked.

9. Assembly according to claim 8, **characterized in that** the closing body (146) is formed by an elastomere sealing element which loosely lies on a channel exit or cavity of the bypass (138) opening in the flow direction.

10. Assembly according to any of the preceding claims, **characterized by** a pressure reducer (40) on the outlet side.

11. Assembly according to claim 10, **characterized by** a pressure gauge (42) for detecting and displaying the outlet pressure generated by the pressure reducer (40).

12. Assembly according to claim 11, **characterized by** a piston (164) which is exposed to pressure in the housing cup (38) on one side and outlet pressure on the other side and which disconnects the connection between the pressure reducer (40) and the pressure gauge (42) if the pressure in the housing cup is smaller than the outlet pressure generated by the pressure reducer.

13. Assembly according to claim 12, **characterized in that**
(a) the piston (164) is moveably guided in a first end (166) of a channel (162);
(b) wherein the channel ends with a second end (168) which is remote to the piston in the housing cup (38) or in a socket at the housing adapted to be connected to the housing cup, and
(c) the end of the piston remote to the housing cup is positioned in the connecting range between the pressure reducer (40) and the pressure gauge (42).

14. Assembly according to claim 13, **characterized by** a stop inside the channel interior for limiting the piston movement.

15. Assembly according to any of the preceding claims, **characterized in that** the filter (58) is configured to be connected to the housing (24) by a bayonet fastening.

16. Assembly according to any of the preceding claims, **characterized in that** the stop valve (26) is connected to a moveable stop element (74) which engages in the movement necessary for removing the housing cup and which enables the movement necessary for removing the housing cup if the stop valve is closed.

17. Assembly according to claim 16, **characterized in that**
(a) the stop valve (26) is a ball valve,
(b) the ball (28) of the ball valve is connected to a spindle (80) present on the rotation axis of the ball,
(c) the stop is formed by a plate (74), a pin or any other stop element, which has larger diameters in a first direction in the plane perpendicular to the rotation axis of the ball than in a second direction in the plane perpendicular to the rotation axis, and
(d) the stop engages in the rotational movement for removing the housing cup in the flow position and is screwed outwards from the range of the housing cup upon rotation of the ball into a blocking positon.

18. Assembly according to any of the preceding claims, **characterized in that** the housing cup (38) has an outlet at its lower end which is configured to be blocked.

## Revendications

1. Disposition de protection contre les fuites (10) destinée à être installée dans une installation d'eau en amont d'un ou de plusieurs points de soutirage, comprenant
(a) un boîtier (24) ;
(b) un dispositif de fermeture (26) destiné à interrompre l'amenée d'eau dans l'installation d'eau ; et
(c) un filtre (58) qui est disposé dans une cartouche de boîtier (38) pouvant se fixer au boîtier de sorte à pouvoir s'enlever ;
**caractérisée par**
(d) un dispositif de blocage (74) destiné à bloquer la cartouche de boîtier dans une position de fixation sur le boîtier,
(e) le blocage pouvant s'enlever en actionnant le dispositif de fermeture.

2. Disposition selon la revendication 1, **caractérisée par** un appareil de commande (34) muni d'un dispositif de traitement de signaux sollicité par les signaux d'un débitmètre (50) et destiné à déterminer toute condition de flux atypique et/ou indésirable dans l'installation d'eau et destiné à actionner le dispositif de fermeture (26).

3. Disposition selon la revendication 2, **caractérisée en ce que** le boîtier (24) présente une entrée (14) et une sortie (16) et le débitmètre (50) est disposé sur le trajet du flux entre l'entrée et la sortie en aval du filtre (58).

4. Disposition selon la revendication 3, **caractérisée en ce que** le débitmètre est formé d'une turbine (50).

5. Disposition selon la revendication 4, **caractérisée en ce qu'**un clapet anti-retour (120) est disposé devant la turbine (50) .

6. Disposition selon la revendication 5, **caractérisée en ce qu'**il est prévu un bipasse (138, 140) qui mène une partie du flux directement dans la zone située devant la turbine (50) en passant devant le clapet anti-retour (120).

7. Disposition selon la revendication 6, **caractérisée en ce que** le bipasse (138, 140) est configuré de sorte que le flux partiel mené du bipasse à la turbine (50) frappe une ailette de turbine avec une puissance maximale.

8. Disposition selon la revendication 6 ou 7, **caractérisée par** un corps de fermeture (146) qui permet le passage d'un flux par le bipasse (138, 140) dans le sens d'écoulement de l'entrée (14) en direction de la sortie (16) et est pressé lors du reflux à l'inverse du sens d'écoulement dans un siège (144) de sorte que le reflux est bloqué par le bipasse (138, 140).

9. Disposition selon la revendication 8, **caractérisée en ce que** le corps de fermeture (146) est formé d'un élément d'étanchéité élastomère qui est adjacent à une sortie de canal s'ouvrant dans le sens du flux ou à un espace creux du bipasse (138) de sorte à pouvoir s'enlever.

10. Disposition selon l'une quelconque des revendications précédentes, **caractérisée par** un réducteur de pression (40) situé du côté sortie.

11. Disposition selon la revendication 10, **caractérisée par** un manomètre (42) destiné à saisir et afficher la pression de sortie générée par le réducteur de pression (40).

12. Disposition selon la revendication 11, **caractérisée par** un piston (164) qui est sollicité d'un côté par la pression régnant dans la cartouche de boîtier (38) et d'un autre côté par la pression de sortie et qui interrompt la liaison entre le réducteur de pression (40) et le manomètre (42) lorsque la pression régnant dans la cartouche de boîtier est inférieure à la pression de sortie générée par le réducteur de pression.

13. Disposition selon la revendication 12, **caractérisée en ce que**
(a) le piston (164) est guidé de sorte à pouvoir coulisser dans une première extrémité (166) d'un canal (162),
(b) le canal débouchant avec la seconde extrémité (168) opposée au piston dans la cartouche de boîtier (38) ou avec une tubulure du boîtier pouvant être reliée à la cartouche de boîtier, et
(c) l'extrémité du piston opposée à la cartouche de boîtier est disposée dans la zone de liaison entre le réducteur de pression (40) et le manomètre (42).

14. Disposition selon la revendication 13, **caractérisée par** une butée formée à l'intérieur du canal et destinée à limiter le déplacement du piston.

15. Disposition selon l'une quelconque des revendications précédentes, **caractérisée en ce que** le filtre (58) peut être relié au boîtier (24) par l'intermédiaire d'une fermeture à baïonnette.

16. Disposition selon l'une quelconque des revendications précédentes, **caractérisée en ce que** le dispositif de fermeture (26) est relié à un élément de butée (74) pouvant se déplacer qui s'engage dans un déplacement nécessaire à l'enlèvement de la cartouche de boîtier lorsque le dispositif de fermeture est ouvert et qui libère le déplacement nécessaire à l'enlèvement de la cartouche de boîtier lorsque le dispositif de fermeture est fermé.

17. Disposition selon la revendication 16, **caractérisée en ce que**
(a) le dispositif de fermeture (26) est formé d'un robinet à bille,
(b) la bille (28) du robinet à bille est reliée à une broche (80) se trouvant sur l'axe de rotation de la bille,
(c) l'élément de butée est formée d'une plaque (74), d'une tige ou de tout autre élément de butée qui présente, dans une première direction dans le plan perpendiculaire à l'axe de rotation de la bille, des dimensions plus grandes que dans une seconde direction dans le plan perpendiculaire à l'axe de rotation, et
(d) l'élément de butée s'engage dans un déplacement de rotation pour enlever la cartouche de boîtier (38) lorsque la bille est en position d'écoulement et est tourné hors de la zone de la cartouche de boîtier lorsque la bille est en position de fermeture.

18. Disposition selon l'une quelconque des revendications précédentes, **caractérisée en ce que** la cartouche de boîtier (38) présente à l'extrémité inférieure une sortie pouvant être fermée.
